**Europäisches Patentamt**

**European Patent Office**

**Office européen des brevets**

(11) Veröffentlichungsnummer: **0 099 460
B1**

(12) **EUROPÄISCHE PATENTSCHRIFT**

(45) Veröffentlichungstag der Patentschrift:
04.06.86

(21) Anmeldenummer: **83105361.6**

(22) Anmeldetag: **31.05.83**

(51) Int. Cl.⁴: **E 06 B 3/62,** B 60 J 1/10,
**B 60 R 13/06**

(54) **Scheibeneinfassung.**

(30) Priorität: **22.06.82 DE 3223155**

(43) Veröffentlichungstag der Anmeldung:
**01.02.84 Patentblatt 84/5**

(45) Bekanntmachung des Hinweises auf die Patenterteilung:
**04.06.86 Patentblatt 86/23**

(84) Benannte Vertragsstaaten:
**DE FR GB IT**

(56) Entgegenhaltungen:
**EP - A - 0 029 391
DE - A - 2 659 262
DE - A - 3 018 213
FR - A - 2 153 630
GB - A - 2 086 464
US - A - 3 851 432
US - A - 4 206 536**

(73) Patentinhaber: **AUDI AG, Postfach 220,
D-8070 Ingolstadt (DE)**

(72) Erfinder: **Zwickl, Johann, Effnerstrasse 46,
D-8070 Ingolstadt (DE)**
Erfinder: **Hänle, Edgar, Tulpenstrasse 18,
D-8071 Wettstetten (DE)**
Erfinder: **Wunderlich, Joachim, Willstätterstrasse 2,
D-8070 Ingolstadt (DE)**
Erfinder: **Härdl, Stefan, Sternstrasse 5,
D-8070 Gaimersheim (DE)**

(74) Vertreter: **Le Vrang, Klaus, AUDI AG
Postfach 220 Patentabteilung, D-8070 Ingolstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Scheibeneinfassung für eine feststehende Scheibe in einem Kraftfahrzeug, welche Scheibe einen Befestigungsflansch übergreifend in einen Karosserieausschnitt eingesetzt und mittels eines Klebers befestigt und abgedichtet ist, und wobei zwischen dem Rand der Scheibe und einem umlaufenden Steg des Karosserieausschnittes ein Fuss eines weichelastischen Profilkörpers einragt und ein Fortsatz des Profilkörpers den Rand der Scheibe hintergreift und an diesem befestigt ist.

Aus der EP-AI-0029391 ist eine Scheibeneinfassung bekannt, bei der ein V-förmig ausgebildeter Profilkörper durch Klemmung in dem Spalt zwischen dem Rand der Scheibe und dem umlaufenden Steg des Karosserieausschnittes gehalten ist. Zur Erhöhung der Haltekraft sind am Profilkörper zusätzlich Lippen angeformt. Trotz dieser Massnahmen ist ein sicherer Halt des Profilkörpers in dem Spalt nicht gewährleistet, wenn der Abstand zwischen Scheibe und Steg infolge ungünstiger Toleranzen beider Teile sehr gross wird.

Bei einer aus der GB-A-2086464 bekannten Scheibeneinfassung ist der Profilkörper an der Scheibe fixiert. Eine an dem Profilkörper angeformte Lippe übergreift den Spalt und liegt an dem begrenzenden Karosserieteil auf, so dass auch grössere Toleranzen überbrückt werden können.

Der Erfindung liegt die Aufgabe zugrunde, eine gattungsgemässe Scheibeneinfassung so auszubilden, dass sie einen leichten Zugang bis zu dem die Scheibe haltenden Kleber ermöglicht.

Die Aufgabe wird dadurch gelöst, dass der Fuss des Profilkörpers im Einbauzustand von aussen frei zugänglich ist, derart, dass bei an der Scheibe festgelegtem Fortsatz der Fuss aus dem Spalt zwischen Scheibe und dem umlaufenden Steg des Karosserieausschnittes zur Ermöglichung eines Zugangs zum Spalt herausbewegbar bzw. gegenüber dem Fortsatz um mindestens etwa 180° herausschwenkbar ist.

Dadurch ist in einfacher Weise ein Zugang bis zur Klebestelle der Scheibe geschaffen, um beispielsweise mittels eines Schneidedrahtes eine beschädigte Scheibe herauszutrennen. Sollte sich herausstellen, dass an einer Stelle der Scheibenbefestigung Wasser eintritt, dann können nur durch Herausziehen des Fusses des Profilkörpers an der entsprechenden Stelle ohne Schwierigkeiten Nachdichtarbeiten durchgeführt werden. Gleichsam ist es möglich, etwa den Dachbereich nachzulackieren, ohne dass die Scheibeneinfassung abgeklebt werden müsste, was stets einen Lackrand hinterlässt. Zum Zwecke der Nachlackierung wird der Fuss des Profilkörpers aus dem Spalt herausbewegt und durch mehrere Klebstreifenabschnitte provisorisch an der Scheibe fixiert. Somit kann auch der Steg lackiert werden, wobei der Lackansatz stets durch die nach der Trocknung zurückbewegte Scheibeneinfassung verdeckt ist.

Bei der erfindungsgemässen Scheibeneinfassung ist es natürlich auch möglich, die Scheibeneinfassung an der Scheibe vorzumontieren, wodurch nicht nur teure Zeiten am Endmontageband eingespart werden können, sondern auch die Verletzungsgefahr durch die scharfen Ränder der Scheibe bei der Scheibenmontage reduziert wird. Die Vormontage der Scheibeneinfassung ist im Gegensatz zur Montage der Scheibeneinfassung am Fahrzeug in besonderer Weise für eine automatische Fertigung geeignet.

Wenn der Fuss des Profilkörpers durch ein Hohlprofil gebildet ist, welches mit dem Fortsatz durch ein Zwischenstück verbunden ist. Das Hohlprofil gewährleistet eine ausreichende Elastizität auch bei der Überbrückung grosser Toleranzen und kann leicht in beiden Richtungen (bei der Montage und bei der Demontage) verformt werden. Das Zwischenstück – zweckmässig in Form eines dünnen Steges – ermöglicht ein leichtes Herausschwenken des Profilkörperfusses.

Gemäss einem weiteren vorteilhaften Merkmal der Erfindung kann die von aussen sichtbare Fläche des Profilkörperfusses gegenüber der Aussenkontur des Fahrzeuges zurückgesetzt verlaufen. Durch diese Ausbildung wird eine verdeckt angeordnete Regenrinne gebildet. Diese Massnahme stellt auch sicher, dass der Profilkörper in strömungstechnisch vorteilhafter Weise auch bei grossen Toleranzabweichungen und unsachgemässer Montage nicht gegenüber seinen Umgebungsflächen hervorragt. Diese Ausbildung lässt die entstandene Rinne optisch gleichmässig erscheinen, selbst wenn der Profilkörper nicht gleichmässig verläuft.

Besonders zweckmässig ist, wenn die einander gegenüberliegenden Schenkel des Halteteiles mit Ausklinkungen versehen sind und dadurch die Leiste an den Ecken leicht gebogen und auch dreidimensional verformt werden kann. Die Ausklinkungen sorgen auch bei ungünstigen Toleranzen zwischen der Leiste und der Scheibe dafür, dass zwischen beiden Teilen kein Spalt entsteht, der bei bekannten Lösungen Windgeräusche hervorruft oder beispielsweise Blätter oder in einer Waschanlage Bürstenhaare festhält.

Die Ansprüche 6 und 7 kennzeichnen vorteilhafte, auf die Befestigung des Fortsatzes des Profilkörpers an der Leiste bezogene Ausführungsformen der Erfindung. Wird der Ansatz an der Leiste als Zierleiste ausgebildet, so ist hierfür kein separates Teil erforderlich, welches zudem noch montiert werden müsste.

Anstelle der Befestigung des Profilkörpers an der Scheibe mittels einer Leiste kann dieser auch mit einem U-förmigen Fortsatz versehen sein, welcher den Rand der Scheibe umgreift und gegebenenfalls mit der Scheibe durch Klebung verbunden ist.

In Weiterbildung der Erfindung kann als weitere Alternative der Fuss und der Fortsatz des Profilkörpers durch zwei getrennte oder leicht trennbare Teile gebildet sein.

Bei einer Scheibeneinfassung, bei welcher die Scheibe mittels Distanzstücke im Abstand vom Befestigungsflansch fixiert ist, können zur Vereinfachung die Distanzstücke an dem Profilkörper mit angeformt sein. Wenn Massnahmen getroffen werden sollen, dass die Kleberausbreitung begrenzt werden soll, ist es gleichsam möglich, eine entsprechende Lippe für diesen Zweck an dem Profilkörper mit anzuformen.

Mehrere Ausführungsbeispiele der Erfindung sind in den Zeichnungen dargestellt und werden nachfolgend näher beschrieben. Es zeigt

Fig. 1 einen Schnitt durch eine Scheibeneinfassung im Anschlussbereich einer geklebten Scheibe an den umgebenden Karosseriekörper und

Fig. 2–4 mehrere Ausführungsbeispiele von Scheibeneinfassungen, dargestellt anhand der Bedingungen gemäss Fig. 1.

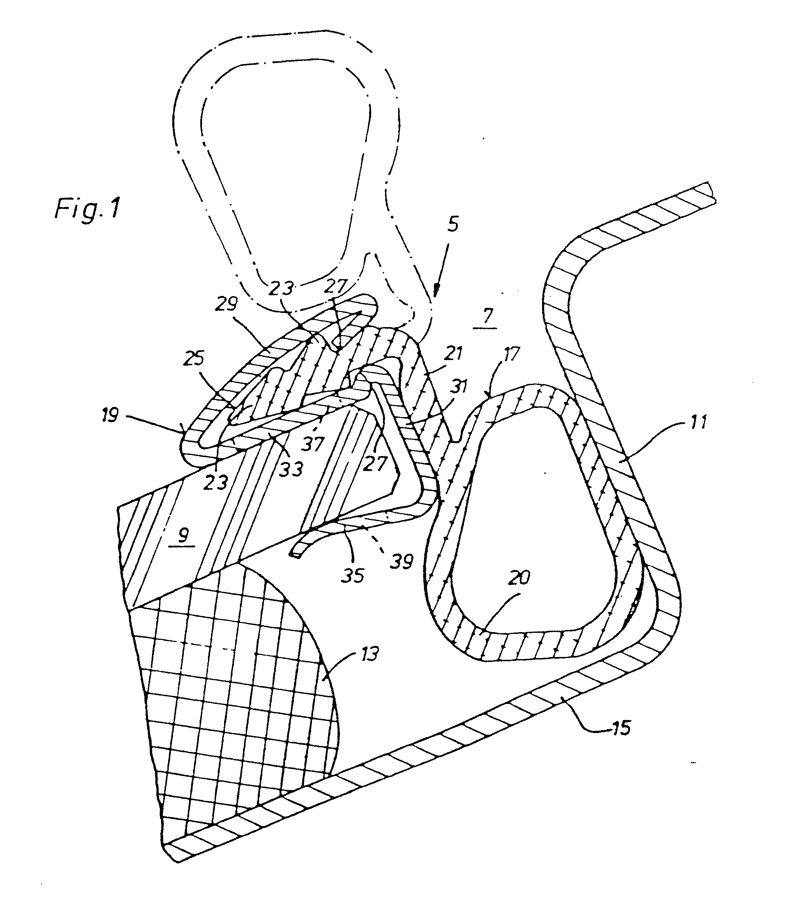

Eine in Fig. 1 dargestellte Scheibeneinfassung 5 ist geeignet, den Spalt 7 zwischen einer Scheibe 9 und einem Steg 11 eines die Scheibe umgebenden Karosserieausschnittes zu überbrücken. Die Scheibe 9 wird durch einen Kleber 13 an einem Befestigungsflansch 15 gehalten, welcher sich im rechten Winkel an den Steg 11 des Karosserieausschnittes anschliesst.

Die Scheibeneinfassung 5 gemäss Fig. 1 setzt sich aus einem Profilkörper 17 und einer Leiste 19, welcher der Befestigung der Scheibeneinfassung 5 dient, zusammen.

An den als Hohlprofil ausgebildeten Fuss 20 des Profilkörpers 17 schliesst sich nach aussen hin ein dünnwandiges Zwischenstück 21 an, welches in einem mit Vorsprüngen 23 versehenen Fortsatz 25 endet. Die Vorsprünge 23 sind durch Hinterschneidungen 27 gehalten, welche in einem taschenförmigen Ansatz 29 der Leiste 19 ausgebildet sind. Der Fuss 20 des Profilkörpers 17 kann aus dem Spalt 7 herausbewegt werden (strichpunktiert dargestellt), um einen ungehinderten Zugang zu diesem Raum zu ermöglichen.

Die Leiste 19 weist neben dem Ansatz 29 ein U-förmiges Halteteil 31 auf, welches durch Vorspannung den Rand der Scheibe 9 übergreift. Die einander gegenüberliegenden Schenkel 33 und 35 des Halteteiles 31 sind mit Ausklinkungen 37 bzw. 39 versehen, welche ein leichtes Verformen der Leiste 19 ermöglichen, um diese etwa ohne Unterbrechung um einen Radius der Scheibe 9 herumzuführen.

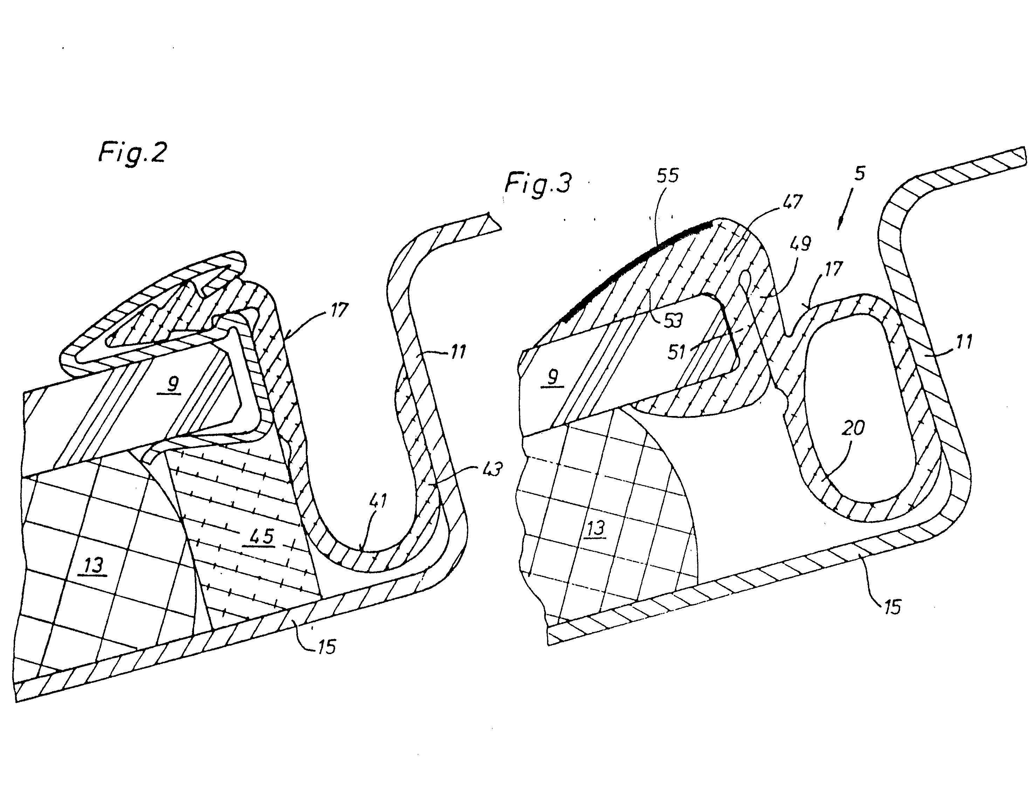

In den Ausführungsbeispielen gemäss den Fig. 2 bis 4 werden bei den dort dargestellten Scheibeneinfassungen im Hinblick auf die Scheibe und den Karosserieausschnitt die Bedingungen gemäss Fig. 1 zugrunde gelegt und demzufolge für gleiche Teile (auch bei den Scheibeneinfassungen) gleiche Bezugszeichen verwendet.

Die Scheibeneinfassung gemäss Fig. 2 unterscheidet sich von derjenigen nach Fig. 1 dadurch, dass anstelle eines Hohlprofils für den Fuss des Profilkörpers ein U-Profil 41 Anwendung findet, dessen auslaufender Schenkel 43 sich an den Steg 11 des Karosserieausschnittes anlegt. Ausserdem ist dort gezeigt, wie der Abstand der Scheibe 9 vom Befestigungsflansch 15 durch ein Distanzstück 45 gleichbleibend fixiert ist.

Das Ausführungsbeispiel gemäss Fig. 3 unterscheidet sich von den vorherigen im wesentlichen dadurch, dass zur Befestigung des Profilkörpers 17 keine Leiste verwendet wird, sondern dass an diesem ein U-förmiger Fortsatz 47 mit angeformt ist, welcher den Rand der Scheibe 9 umgreift und dadurch die Scheibeneinfassung 5 festlegt. Der Fortsatz 47 ist mit dem Fuss 20 des Profilkörpers 17 durch ein Zwischenstück 49 verbunden, welches sich bei montiertem Profilkörper 17 parallel an die Basis 51 des U-förmigen Fortsatzes 47 anlegt. Der von aussen sichtbare Schenkel 53 des U-förmigen. Zwischenstückes 49 weist eine Dekoreinlage in Form eines Metallstreifens 55 auf.

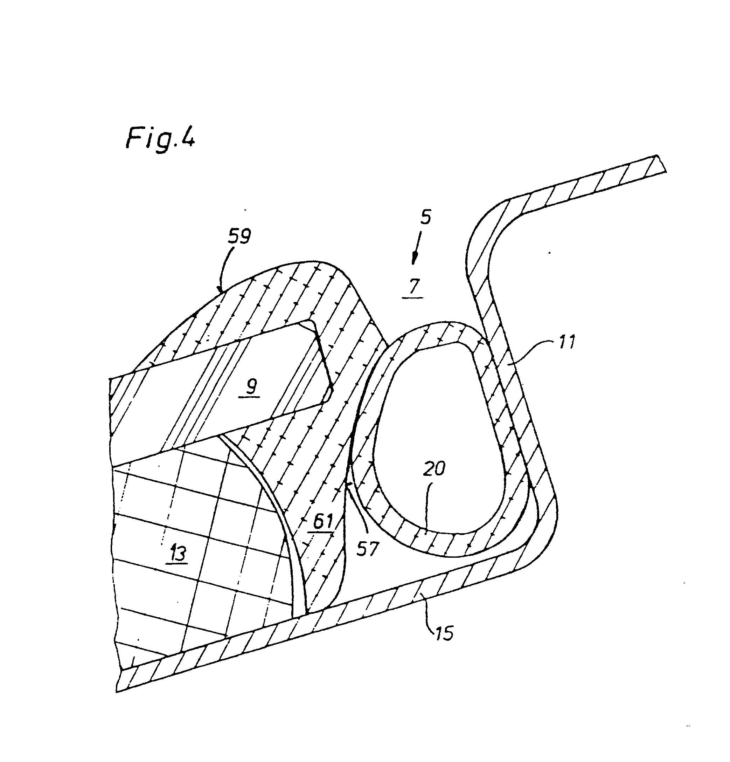

Schliesslich ist in einem letzten Ausführungsbeispiel gemäss Fig. 4 eine Scheibeneinfassung 5 dargestellt, bei welcher der Fuss 20 des Profilkörpers als separates Teil in den Spalt 7 zwischen der Scheibe 9 und dem Steg 11 des Karosserieausschnittes eingeschoben ist. Dieser wird neben dem Steg 11 von einer keilförmigen Fläche 57 eines Scheibenrahmens 59 gehalten. Der Scheibenrahmen 59 umfasst den Rand der Scheibe 9 und läuft in einer nach unten gerichteten Nase 61 aus, welche bis an den Befestigungsflansch 15 heranreicht und die Ausbreitung des Klebers 15 begrenzt.

**Patentansprüche**

1. Scheibeneinfassung für eine feststehende Scheibe (9) in einem Kraftfahrzeug, welche Scheibe einen Befestigungsflansch (15) übergreifend in einen Karosserieausschnitt eingesetzt und mittels eines Klebers (13) befestigt und abgedichtet ist, und wobei zwischen dem Rand der Scheibe und einem umlaufenden Steg (11) des Karosserieausschnittes ein Fuss (20, 41) eines weichelastischen Profilkörpers (17) einragt und ein Fortsatz (25, 47) des Profilkörpers den Rand der Scheibe hintergreift und an diesem befestigt ist, dadurch gekennzeichnet, dass der Fuss (20, 41) des Profilkörpers (17) im Einbauzustand von aussen frei zugänglich ist, derart, dass bei an der Scheibe (9) festgelegtem Fortsatz der Fuss aus dem Spalt (7) zwischen Scheibe und dem umlaufenden Steg (11) des Karosserieausschnittes zur Ermöglichung eines Zugangs zum Spalt herausbewegbar bzw. gegenüber dem Fortsatz um mindestens etwa 180° herausschwenkbar ist.

2. Scheibeneinfassung nach Anspruch 1, dadurch gekennzeichnet, dass der Fuss (20) des Profilkörpers (17) durch ein Hohlprofil gebildet ist, welches mit dem Fortsatz (25) durch ein Zwischenstück (21) verbunden ist.

3. Scheibeneinfassung nach einem der Ansprüche 1 oder 2, dadurch gekennzeichnet, dass die von aussen sichtbare Fläche des Fusses (20) gegenüber der Aussenkontur des Fahrzeuges zurückgesetzt verläuft.

4. Scheibeneinfassung nach wenigstens einem der Ansprüche 1 bis 3, dadurch gekennzeichnet, dass zur Befestigung des Profilkörpers (17) eine Leiste (19) mit einem U-förmigen Halteteil (31) vorgesehen ist, welches den Rand der Scheibe (9) unter Vorspannung umfasst.

5. Scheibeneinfassung nach Anspruch 4, dadurch gekennzeichnet, dass die einander gegenüberliegenden Schenkel (33, 35) des Halteteiles (31) mit Ausklinkungen (37 und 39) versehen sind.

6. Scheibeneinfassung nach Anspruch 4 oder 5, dadurch gekennzeichnet, dass die Leiste mit einem taschenförmigen Einsatz (29) zur Aufnahme des Fortsatzes (25) des Profilkörpers (17) versehen ist.

7. Scheibeneinfassung nach Anspruch 6, dadurch gekennzeichnet, dass der Fortsatz (25) des Profilkörpers (17) Vorsprünge (23) aufweist, welche in wenigstens einer Hinterschneidung (27) des Ansatzes (29) an der Leiste (19) gehalten sind.

8. Scheibeneinfassung nach wenigstens einem der Ansprüche 1 bis 3, dadurch gekennzeichnet, dass zur Befestigung des Profilkörpers (17) an der Scheibe (9) dieser einen U-förmigen Fortsatz (47) aufweist, welcher den Rand der Scheibe (9) umgreift.

9. Scheibeneinfassung nach Anspruch 8, dadurch gekennzeichnet, dass der Fuss (20) und der Fortsatz (Scheibenrahmen 59) durch zwei getrennte oder leicht trennbare Teile gebildet ist.

10. Scheibeneinfassung, bei welcher die Scheibe mittels Distanzstücke im Abstand vom Befestigungsflansch fixiert ist, nach einem der Ansprüche 1 bis 9, dadurch gekennzeichnet, dass die Distanzstücke (45) an dem Profilkörper angeformt sind.

11. Scheibeneinfassung nach einem der Ansprüche 1 bis 9, dadurch gekennzeichnet, dass an dem Profilkörper (17) eine Nase (61) zur Begrenzung der Kleberausbreitung angeformt ist.

**Claims**

1. Pane border for a fixed pane (9) in a motor vehicle, which pane extends over a mounting flange (15) when inserted in a bodywork aperture and is sealed and secured by means of an adhesive (13), a foot (20, 41) of a soft-elastic section element (17) projecting in between the rim of the pane and an encircling web (11) of the bodywork aperture, and an extension (25, 47) of the section element being made to engage behind the pane rim and being secured thereto, characterised in that the foot (20, 41) for the section element (17) is freely accessible from the exterior in the assembled state, in such a manner that with the extension secured to the pane (9) the foot is movable out of the gap (7) between the pane and the encircling web (11) of the bodywork aperture to allow access to the gap, or is pivotably movable through at least about 180° relatively to the extension.

2. Pane border according to claim 1, characterised in that the foot (20) of the section element (17) is formed of a hollow section which is connected to the extension (25) by an intermediate portion (21).

3. Pane border according to one of claims 1 or 2, characterised in that the externally visible surface of the foot (20) is set back relatively to the external contour of the vehicle.

4. Pane border according to at least one of claims 1 to 3, characterised in that for securing the section element (17) there is provided a strip (19) having a U-shaped holding portion (31) which surrounds, with preload, the rim of the pane (9).

5. Pane border according to claim 4, characterised in that the mutually opposite legs (33, 35) of the holding portion (31) are provided with cutaways (37 and 39).

6. Pane border according to claim 4 or 5, characterised in that the strip is provided with a pocket-shaped lip (29) for accommodating the extension (25) of the section element (17).

7. Pane border according to claim 6, characterised in that the extension (25) of the section element (17) has projections (23) which are held in at least one undercut (27) of the lip (29) on the strip (19).

8. Pane border according to at least one of claims 1 to 3, characterised in that for securing the section element (17) to the pane (9) the said element has a U-shaped extension (47) which engages about the rim of the pane (9).

9. Pane border according to claim 8, characterised in that the foot (20) and the extension (pane frame 59) are formed of two separate or readily separatable parts.

10. Pane border wherein the pane is fixed at a spacing from the mounting flange by means of spacer elements, according to one of claims 1 to 9, characterised in that the spacer elements (45) are moulded on to the section element.

11. Pane border according to one of claims 1 to 9, characterised in that a nose (61) is moulded on to the section element (17) for limiting the spread of the adhesive.

**Revendications**

1. Bordure de vitre pour une glace fixe (9) dans un véhicule automobile, glace qui est insérée dans une découpure de la carrosserie en recouvrant un rebord de fixation (15) et qui est fixée et rendue étanche au moyen d'une colle (13), la base (20, 41) d'un corps profilé souple (17) s'engageant entre le bord de la glace et une nervure circonférentielle (11) de la découpure de la carrosserie et un appendice (25, 47) de ce corps profilé saisissant par derrière le bord de la glace et étant fixé à celui-ci, caractérisée en ce que la base (20, 41) du corps profilé (17) à l'état monté est librement accessible de l'extérieur, de telle manière que lorsque l'appendice (25, 47) est fixé à la glace (9), il soit possible de faire sortir la base de la fente (7) entre la glace et la nervure circonférentielle (11) de la découpure de la carrosserie ou de la faire pivoter vers l'extérieur d'au moins 180° environ par rapport à l'appendice, pour rendre possible un accès à la fente.

2. Bordure de vitre selon la revendication 1, caractérisée en ce que la base (20) du corps profilé (17) est constituée par un profilé creux qui est relié à l'appendice (25) par une pièce intermédiaire (21).

3. Bordure de vitre selon la revendication 1 ou 2, caractérisée en ce que la surface de la base (20) qui est visible de l'extérieur s'étend en retrait par rapport au contour extérieur du véhicule automobile.

4. Bordure de vitre selon l'une quelconque des revendications 1 à 3, caractérisée en ce qu'il est prévu, pour la fixation du corps profilé (17), une baguette (19) comportant une partie de maintien (31) en forme d'U qui enserre sous prétension le bord de la glace (9).

5. Bordure de vitre selon la revendication 4, caractérisée en ce que les branches (33, 35) de la partie de maintien (31) qui sont situées en face l'une de l'autre sont munies d'entailles (37 et 39).

6. Bordure de vitre selon la revendication 4 ou 5, caractérisée en ce que la baguette est munie d'un prolongement (29) en forme de poche pour le logement de l'appendice (25) du corps profilé (17).

7. Bordure de vitre selon la revendication 6, caractérisée en ce que l'appendice (25) du corps profilé (17) présente des saillies (23) qui sont maintenues dans une contre-dépouille (27) au moins du prolongement (29) de la baguette (19).

8. Bordure de vitre selon l'une quelconque des revendications 1 à 3, caractérisée en ce que, pour la fixation du corps profilé (17) à la glace (9), ce corps profilé présente un appendice (47) en forme d'U qui enserre le bord de la glace (9).

9. Bordure de vitre selon la revendication 8, caractérisée en ce que la base (20) et l'appendice (cadre de vitre 59) sont constitués par deux pièces séparées ou facilement séparables.

10. Bordure de vitre selon l'une quelconque des revendications 1 à 9, avec laquelle la glace est fixée à distance de la nervure de fixation au moyen de pièces d'écartement, caractérisée en ce que les pièces d'écartement (45) sont formées sur le corps profilé.

11. Bordure de vitre selon l'une quelconque des revendications 1 à 9, caractérisée en ce qu'il est formé, sur le corps profilé (17), un talon (61) pour limiter l'expansion de la colle.

Fig.1

0099460

7

Fig.2

Fig.3

0099460

Fig.4